# EUROPEAN PATENT SPECIFICATION

(11) **EP 4 229 663 B1**
(45) Date of publication and mention of the grant of the patent: **13.11.2024**
(21) Application number: 21786882.7
(22) Date of filing: 04.10.2021
(51) Int. Cl.: H01F 41/02, H02K 15/02, H02K 15/12

(54) **APPARATUS FOR ASSEMBLING LAMELLAR PACKAGES FOR ELECTRICAL USE**
VORRICHTUNG ZUM ZUSAMMENBAUEN VON LAMELLAREN GEHÄUSEN FÜR ELEKTRISCHE VERWENDUNG
APPAREIL D'ASSEMBLAGE DE PAQUETS LAMELLAIRES À USAGE ÉLECTRIQUE

(30) Priority: 14.10.2020 IT 202000024190
(43) Date of publication of application: 23.08.2023
(73) Proprietor: Corrada S.p.A, 20020 Lainate (MI) (IT)
(72) Inventor: VERRI, Davide, 20010 INVERUNO (MI) (IT); CURATOLI, Alberto, 20017 RHO (MI) (IT); BERTOCCHI, Gianluca, 20017 RHO (MI) (IT); PERUCCHI, Pietro Maurizio, 26859 VALERA FRATTA (LO) (IT); DE ROSSI, Ivan, 20037 PADERNO DUGNANO (MI) (IT)
(74) Representative: Ripamonti, Enrico
(86) International application number: PCT/EP2021/077242
(87) International publication number: WO 2022/078794

(56) References cited:
- CN-A- 107 533 907
- CN-A- 110 064 562
- JP-A- 2000 164 442
- JP-A- 2001 321 850
- US-A1- 2015 097 463

## Description

The present invention relates to an apparatus for assembling lamellar packages for electrical use.

More specifically, the present invention refers to an apparatus for assembling lamellar packages made starting from a metal sheet from which by shearing, magnetic laminations are obtained packed or overlapping one another to define lamellar packages for use in electric machines such as motors, generators, transformers, meters, ignition coils and similar electrical equipment.

Even more in particular, the present invention relates to an apparatus adapted to make lamellar packages through a bonding process of a single lamination to be overlapped on another to obtain the lamellar package which, as indicated above, will define the magnetic circuits, for example, of electric motors (rotor, stator) or transformers and the like.

As is known, "lamellar packages" are made by overlapping individual laminations, placing them in direct contact with each other without the presence, between said overlapping laminations, of intermediate air spaces which can generate the so-called "spring effect" which causes a worsening of the electrical properties and, at the same time, also affects both the dimensional and mechanical features of the electrical machine comprising the lamellar package.

Lamellar packages are traditionally made by overlapping and connecting the individual laminations which are obtained, for example, from shearing moulds which form the laminations by means of a punch and, for example, from a strip lamination or by means of a laser cut or in another known manner and with said laminations which, after forming, can be overlapped and connected to each other on the same machine which forms the single lamination or can be overlapped and connected to each other on assembly machines.

Traditionally, the aforementioned laminations can be connected to each other by means of coupling or hooking parts called "staples" which are obtained by deformation of the laminations themselves in specifically selected positions and with said lamination parts which, during the coupling step, are introduced or forced into corresponding recessed portions of an underlying lamination to form, by successive overlapping, the package of laminations.

As an alternative to the above described method of constraint with "staples", the laminations can be packed and constrained to each other by means of embossments formed on the surface of the laminations themselves.

According to a further known production technique, the laminations can be packed and constrained to each other by means of glue or other rigid constraint means of known type.

A known technique of assembling lamellar packages by means of glue involves the use of pressure nozzles connected to a glue pumping system (typically of the bi-component type) which is then applied to the sheet to be sheared at the mould inlet; more specifically, the glue is applied by means of sprayers and nozzles with a first glue component which is applied at points on an upper layer of the sheet and with the second component which is equally applied at points on the lower layer of the same sheet; the gluing takes place in a sheet detachment station by adhering the upper part of the lamination with the first glue layer with the lower side of a subsequent lamination covered with the second glue component.

Another known technique for the assembly of lamellar packages by means of glue (of the bi-component type) involves the use of nozzles with the first glue component which is applied by pressure sprayers connected to a glue pumping system and arranged at the shearing mould inlet and with the second glue component which is applied in a special and dedicated station arranged in the lower part of the shearing mould; also in this case, the lamellar package is formed by adhering the lamination with the layer of the first glue component with a subsequent lamination provided with the second glue component.

For example, a technique is known for applying glue which is deposited on the sheet at the mould inlet by means of equipment for applying a bi-component glue, with a first component (or component A) which is applied on the upper side of the sheet and with a second component (or component B) which is applied on the lower surface of the sheet always at the mould inlet or by means of nozzles arranged in a dedicated spraying station placed in the lower part of the mould, with the gluing and forming of the lamellar package occurring in a sheet detachment station by adhering the upper part of the lamination (which is covered by the first glue component) with a lower part of a subsequent lamination (which is covered by the second glue component). Such known solutions have some significant drawbacks related to the fact that the use of nozzles and pumps for the supply of the same involves machine stops for maintenance, control and the like and this obviously results in an extension of the production times and, consequently, of the related costs.

A further drawback is represented by maintenance problems caused by the fact that the nozzles/sprayers are arranged inside the mould (as in the case described above and relating to the application of the second glue component or component B).

A further drawback of the traditional equipment is that the nozzles or sprayers "spray" the glue on the sheet with consequent problems related to the cleaning of the bonding process and the consumption of glue.

A known solution is described in US2015/0097463 which refers to a bonding device by an adhesive means and an activator with the adhesive means deposited on a metal sheet by means of overlapping rollers, one of which is rubberized and impregnated with glue and has recesses made on the outer surface of the roller with the function of not impregnating portions or areas of a connection net adapted to keep in position the lamination sheared from a piece of sheet which passes between the upper and lower rollers.

However, such a solution also has the above drawbacks.

The object of the present invention is to overcome the drawbacks described above.

More in particular, an object of the present invention is to provide an apparatus for assembling lamellar packages for electrical use which allows to make a lamellar package by means of bonding without waste and/or dispersion of glue and in a more precise and clean manner.

A further object of the present invention is to provide an apparatus for assembling lamellar packages which is not subject to frequent and long machine stops for maintenance and control operations.

Another object of the present invention is to provide an apparatus for assembling lamellar packages which is not constrained to fluid-dynamic parameters which characterize the traditional apparatuses described above.

A further object of the present invention is to provide an apparatus for assembling lamellar packages which allows to obtain a finished product characterized by high performance in terms of yield and efficiency.

A further object of the present invention is to provide users with an apparatus for assembling lamellar packages for electrical use adapted to ensure high resistance and durability over time and such as to be easily and economically made.

These and other objects are achieved by the invention having the features according to claim 1.

Advantageous embodiments of the invention appear from the dependent claims.

The constructive and functional features of the apparatus for assembling lamellar packages for electrical use of the present invention can be better understood from the following detailed description in which reference is made to the attached drawings which represent a preferred and non-limiting embodiment and in which:

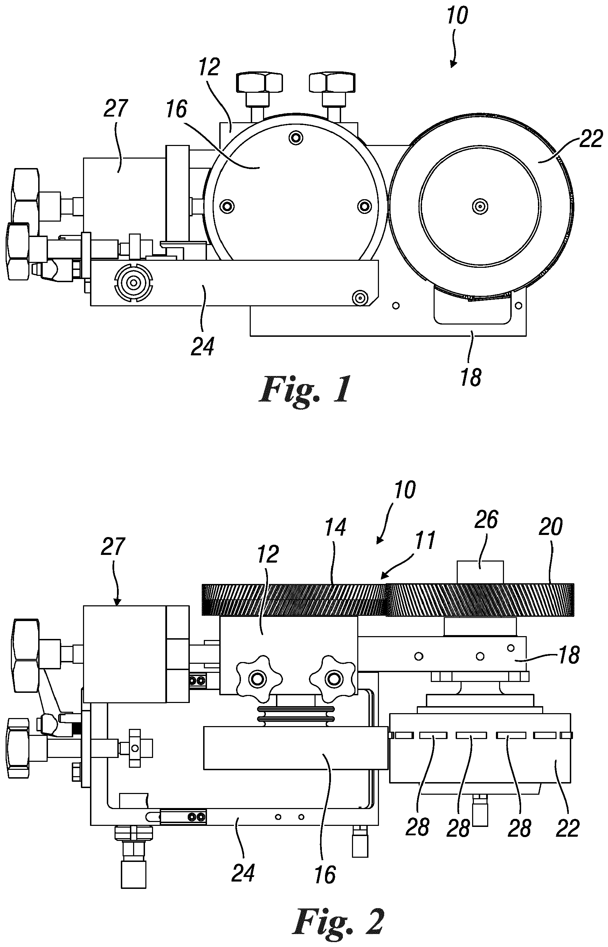

figure 1 schematically illustrates a front view of the apparatus for assembling lamellar packages for electrical use of the present invention;
figure 2 schematically illustrates a top view of the apparatus of figure 1;
figure 3 depicts a diagram of the operation of the assembly apparatus of the invention according to a first mode of execution of the assembly process of the invention;
figure 4 depicts a diagram of the operation of the assembly apparatus of the invention according to a second mode of assembling the lamellar packages;
figure 5 depicts a diagram of the operation of the assembly apparatus of the invention according to a third mode of assembling the lamellar packages.

With reference to the aforementioned figures, the apparatus for assembling lamellar packages for electrical use of the invention, indicated as a whole with 10, is arranged outside or inside the shearing mould and comprises a first body 12 which rotatably supports a first wheel 14 and a first roller 16 (or draft roller as better described below) arranged on the side opposite the first wheel 14 and coaxial thereto (said first wheel 14 and said first roller 16 are rotatably arranged according to a horizontal rotation axis), a second body 18 which rotatably supports a second wheel 20 and a second roller 22 (or mould roller as better defined below) arranged on the side opposite the second toothed wheel 20 (said second wheel 20 and said second roller 22 are rotatably arranged according to a horizontal rotation axis), a tray 24 cooperating with the first roller 16 for the functions better described below. Preferably, the first wheel 14 and the second wheel 20 are defined by gears which engage with each other to define a transmission 11 functional to achieve a rotational movement of the first roller 16 and the second roller 22.

In accordance with alternative embodiments, the transmission 11 is made by means of gearing or a belt or chain transmission.

Preferably, the first wheel 14 is a driven wheel which takes the rotary motion from the second wheel 20 (drive wheel) driven in rotation by a motor (or gear motor) 26. According to an alternative embodiment, the motor 26 can be directly connected to the first wheel 14 which thus becomes a drive with the conducted second wheel 20.

According to a further alternative embodiment, the first wheel 14 and the second wheel 20 can be driven in rotation, each by a motor.

The device of the invention comprises a safety element defined by a safety actuator 27 having the function of disabling the device in the event of malfunctions or the like (such a safety element is of a known and optional type and, therefore, is not described with reference to the constructive features thereof).

The tray 24 is arranged below the first roller 16 and has the function of containing a quantity of glue to be applied, as described below, on a sheet which passes through the shearing mould adapted to make the individual laminations which will then be assembled one on the other to define a lamellar package.

The tray 24 contains, as described above, a glue for assembling the lamellar packages, however, such an assembly by means of the apparatus of the invention can also be implemented using bi-component glue with a first component (or component A) contained in the tray 24 and with a second component (or component B) applied, as described below, by means of another device.

The first roller 16 defines a draft roller placed in contact with the glue contained in the tray 24 and, more specifically, said first roller 16, being partially immersed in the glue and rotating with respect to a horizontal rotation axis thereof, withdraws a quantity of glue from the tray 24 which goes to cover the outer surface of said first roller 16.

The rotation of the first roller 16 is controlled by the first wheel 14 which shares the same rotation axis as said first roller and which takes the motion from the second wheel 20 which is of the drive type.

The second roller 22 defines a mould roller and preferably comprises a plurality of externally protruding reliefs 28 (with respect to the outer circumferential surface of said second roller 22) formed from the side surface of said second roller, with said externally protruding reliefs 28 equally spaced from each other and extending along the entire circumferential profile of said second roller, with the pitch between said externally protruding reliefs 28 being defined as a function of the advancement of the sheet in the mould; it is also to be understood that the shape and the number of said externally protruding reliefs 28 varies according to the type of laminations to be made for the lamellar package.

In an alternative embodiment the second roller 22 can comprise a plurality of incisions or pockets formed from the side surface of the second roller and extending in the thickness thereof, with said incisions or pockets equally spaced from each other and extending along the entire circumferential profile of said second roller.

The second roller 22 takes the rotary motion from the second wheel 20 (with which the second roller shares the rotation axis) rotated by the motor 26.

The transmission defined by the first wheel 14 and the second wheel 20 allows a simultaneous and synchronous movement of the first roller and the second roller as a function of the advancement speed of the sheet in the shearing mould and of the shearing pitch as better defined below.

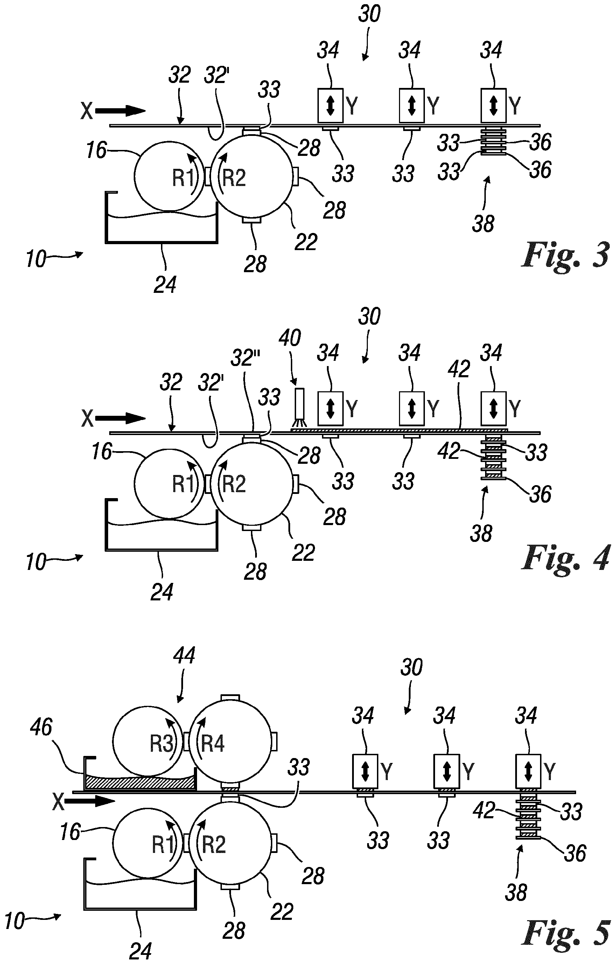

Figures 3, 4 and 5 show the operation of the apparatus of the invention in the case of using a mono-component glue (figure 3) and a bi-component glue (figures 4 and 5).

With particular reference to figure 3, a sheet 32 advances (as indicated by the arrow X) inside a shearing mould 30 (comprising a series of shearing punches 34) with a pitch depending on the type of mould and during the advancement of the sheet the apparatus 10 of the invention is driven by means of the motor 26 with the transmission 11 which by means of the second wheel 20 forces the rotation of the first wheel 14 and therefore of the first roller 16 (or draft roller) and with the same second wheel 20 which, in turn, forces the rotation of the second roller 22 (or mould roller) so that the externally protruding relief 28 of said second roller advances by an amount equal to that of the advancement of the sheet 32 in the mould (therefore, the apparatus of the invention and the advancement of the sheet occur synchronously).

During the synchronous drive of the apparatus of the invention with the advancement of the sheet 32, the first roller 14 (or draft roller) withdraws a quantity of glue from the tray 24 and deposits it on the externally protruding reliefs 28 of the second roller 22 (taking into account that the first and second rollers are in contact along the circumferential surfaces) which in turn, advancing by a pitch corresponding to that of the sheet, deposits a quantity of glue 33 (in the form of the incision or pocket 28 of the second roller 22) on a lower surface 32' of the sheet 32 which advances step by step and undergoes the action of the punches 34 of the shearing mould (which carry out the progressive emptying of the sheet to obtain the single lamination according to the desired shape for the specific function of the lamellar package) and at each stroke of the shearing mould a quantity of glue 33 is applied on the lower surface of the sheet 32 (i.e., the second roller 22 rotates by an amount corresponding to the advancement pitch of the sheet and the glue deposited thereon by the first roller 16).

In the mould detachment step (i.e., when the outer shape of a single lamination 36 is sheared with the detachment thereof from the sheet 32) the individual laminations 36 are packed to define a lamellar package 38, with the layer or quantity of glue 33 on the lower surface of a lamination 36 which adheres to the upper surface of the previously sheared lamination.

With reference to figure 4, the operation of the apparatus of the invention is illustrated in the case of use of a bi-component glue.

In this case, the operation of the device is the same as described with reference to figure 3 (use of mono-component glue) and, in particular, the tray 24 contains a first glue component (or component A) which is applied to the lower surface 32' of the sheet 32 as previously described and the second glue component (or component B or activator component) is applied (to define a glue layer 42) to an upper surface 32" of the sheet 32, for example, by means of a sprayer 40 (or an idle soaked or motorized roller and similarly known) adapted to deposit a layer of second glue component on said upper surface 32"; the application of the second glue component can be carried out both outside and inside the shearing mould and before or after the apparatus of the invention.

With the act of the separation/extraction of the lamellar packages 38 the apparatus of the invention is deactivated so as to interrupt the application of glue on the lower surface of the sheet.

With reference to figure 5, a third and further alternative embodiment is illustrated in which the creation of the lamellar package 38 is always conducted by means of a bi-component glue with the second component (or component B) of the glue which, instead of being applied by means of the sprayer 40, is applied by means of a further device 44 analogous to the device 10 described above for applying the glue on the lower surface 32' of the sheet 32, in particular, said further device 44 comprises a tray 46 containing a quantity of the second glue component.

As can be seen from the foregoing, the advantages achieved by the apparatus for assembling lamellar packages of the present invention are evident.

The apparatus for making lamellar packages for electrical use of the invention advantageously allows to form a lamellar package by bonding with glue which is not deposited by means of nozzles, but with a mechanical device which reduces machine downtime and maintenance times to the advantage of the related costs.

A further advantage of the apparatus of the invention is that, by means of the draft and mould rollers, it allows an application of glue (on the lower surface of the sheet) in a much cleaner manner with respect to an application by means of nozzles or sprayers and this because the glue is not "sprayed" on the sheet, but is deposited or "rested" on said sheet.

Further advantageous is the fact that the apparatus of the invention is not constrained to fluid-dynamic parameters differently from what, on the other hand, occurs in the case of use of nozzles or sprayers.

Although the invention has been described above with particular reference to an embodiment given merely by way of non-limiting example, numerous modifications and variations will be apparent to a person skilled in the art in the light of the above description. Therefore, the present invention intends to embrace all the modifications and variations which fall within the scope of the following claims.

## Claims

1. An apparatus (10) for assembling lamellar packages for electrical use in electric machines such as motors, generators, transformers, meters, ignition coils and similar electrical equipment by means of a bonding with mono- or bi-component glue, arranged outside or inside a shearing mould (30) and comprising a device comprising means for applying a quantity of glue (33) on a lower surface (32') of a sheet (32) according to a pitch corresponding to the advancement pitch of said sheet (32) **characterized in that** said means for applying a quantity of glue comprise means for withdrawing the glue from a container element comprising a first roller (16), or draft roller, rotatably supported by a first body (12) and means for depositing said glue comprising a second roller (22), or mould roller, rotatably supported by a second body (18), said first roller (16) and second roller (22) with rotation axes parallel to each other and with their respective circumferential surfaces in contact and in simultaneous and synchronous movement with the advancement of the sheet (32) and shearing the laminations by means of a transmission (11) comprising a first wheel (14) arranged opposite the first roller (16) and coaxial thereto to share the same rotation axis, a second wheel (20) arranged opposite the second roller (22) and coaxial thereto to share the same rotation axis, one among said first wheel (14) and second wheel (20) being a drive and the other one between said first wheel (14) and second wheel (20) being either conducted and driven in rotation by means of the drive or being a drive comprising a motor (26).

2. The apparatus according to claim 1, **characterized in that** the first roller (16) is arranged partially immersed in the glue container element defined by a tray (24) arranged below said first roller (16) for depositing a layer of glue along the entire circumferential surface of said first roller (16).

3. The apparatus according to claim 1, **characterized in that** the second roller (22), or mould roller, comprises glue draft means formed and extending along the entire circumferential profile of said second roller (22).

4. The apparatus according to claim 3, **characterized in that** the glue draft means comprise a plurality of externally protruding reliefs (28) with respect to the circumferential surface of the second roller (22), the pitch between said externally protruding reliefs (28) being defined as a function of the advancement of the sheet in the mould, said externally protruding reliefs (28) defining a seat for a quantity (33) of glue transferred from the first roller (16) and to be arranged on a lower surface (32') of the sheet (32) in accordance with the advancement pitch of said sheet (32).

5. The apparatus according to claim 3, **characterized in that** the glue draft means comprise a plurality of inserts or pockets formed starting from the side surface of said second roller and extending in the thickness thereof, with said incisions or pockets equally spaced from each other and extending along the entire circumferential profile of said second roller, the pitch between said incisions or pockets being defined according to the advancement of the sheet in the mould, the incisions or pockets defining a seat for a quantity (33) of glue transferred from the first roller (16) and to be arranged on a lower surface (32') of the sheet (32) in accordance with the advancement pitch of said sheet (32).

6. The apparatus according to one or more of the preceding claims, **characterized in that** it comprises feeding means for a second component of a bi-component glue on an upper surface (32") of a sheet (32) arranged inside or outside the shearing mould.

7. The apparatus according to claim 6, **characterized in that** the means for feeding the second glue component comprise a sprayer (40) adapted to deposit a layer of second glue component on said upper surface (32") of the sheet (32).

## Patentansprüche

1. Gerät (10) zum Zusammenbauen von lamellaren Gehäusen zur elektrischen Verwendung in elektrischen Maschinen wie Motoren, Generatoren, Transformatoren, Zählern, Zündspulen und ähnlichen elektrischen Ausrüstungen mittels eines Verleimens mit Mono- oder Bikomponentenleim, die außerhalb oder innerhalb einer Scherform (30) eingerichtet ist und eine Vorrichtung umfasst, die Mittel zum Auftragen einer Menge von Leim (33) auf einer unteren Oberfläche (32') eines Blechs (32) gemäß einem Abstand umfasst, der dem Vorschubabstand des Blechs (32) entspricht, **dadurch gekennzeichnet, dass** die Mittel zum Auftragen einer Leimmenge Mittel zum Entnehmen des Leims aus einem Behälterelement umfassen, das eine erste Walze (16) oder Streckwalze umfasst, die drehbar von einem ersten Körper (12) getragen wird, und Mittel zum Abscheiden des Leims umfasst, die eine zweite Walze (22) oder Formwalze umfassen, die drehbar von einem zweiten Körper (18) getragen wird, die erste Walze (16) und die zweite Walze (22) mit zueinander parallelen Drehachsen und mit ihren jeweiligen Umfangsflächen in Kontakt und in gleichzeitiger und synchroner Bewegung mit dem Vorschub des Blechs (32) und Scheren der Schichten mittels eines Getriebes (11), das ein erstes Rad (14) umfasst, das der ersten Walze (16) entgegengesetzt und koaxial dazu eingerichtet ist, um die gleiche Drehachse gemeinsam zu nutzen, ein zweites Rad (20), das der zweiten Walze (22) entgegengesetzt und koaxial dazu eingerichtet ist, um die gleiche Drehachse gemeinsam zu nutzen, wobei eines des ersten Rades (14) und des zweiten Rades (20) ein Antrieb ist und das andere zwischen dem ersten Rad (14) und dem zweiten Rad (20) entweder mittels des Antriebs in Drehung geführt und angetrieben wird oder ein Antrieb ist, der einen Motor (26) umfasst.

2. Gerät nach Anspruch 1, **dadurch gekennzeichnet, dass** die erste Walze (16) teilweise in das Leimbehälterelement eingetaucht eingerichtet ist, das durch eine Schale (24) definiert ist, die unter der ersten Walze (16) eingerichtet ist, um eine Leimschicht entlang der gesamten Umfangsfläche der ersten Walze (16) abzuscheiden.

3. Gerät nach Anspruch 1, **dadurch gekennzeichnet, dass** die zweite Walze (22) oder Formwalze Leimstreckmittel umfasst, die gebildet sind und sich entlang des gesamten Umfangsprofils der zweiten Walze (22) erstrecken.

4. Gerät nach Anspruch 3, **dadurch gekennzeichnet, dass** die Leimstreckmittel eine Vielzahl von nach außen vorstehenden Reliefs (28) in Bezug auf die Umfangsfläche der zweiten Walze (22) umfassen, wobei der Abstand zwischen den nach außen vorstehenden Reliefs (28) als eine Funktion des Vorschubs des Blechs in der Form definiert ist, wobei die nach außen vorstehenden Reliefs (28) einen Sitz für eine von der ersten Walze (16) übertragene Menge (33) von Leim definieren und auf einer unteren Fläche (32') des Blechs (32) gemäß dem Vorschubabstand des Blechs (32) eingerichtet sind.

5. Gerät nach Anspruch 3, **dadurch gekennzeichnet, dass** die Leimstreckmittel eine Vielzahl von Einsätzen oder Taschen umfassen, die von der Seitenfläche der zweiten Walze ausgehen und sich in deren Dicke erstrecken, wobei die Einschnitte oder Taschen gleichmäßig voneinander beabstandet sind und sich entlang des gesamten Umfangsprofils der zweiten Walze erstrecken, wobei der Abstand zwischen den Einschnitten oder Taschen gemäß dem Vorschub des Blechs in der Form definiert ist, wobei die Einschnitte oder Taschen einen Sitz für eine Menge (33) von Leim definieren, die von der ersten Walze (16) übertragen wird und auf einer unteren Fläche (32') des Blechs (32) gemäß dem Vorschubabstand des Blechs (32) eingerichtet ist.

6. Gerät nach einem oder mehreren der vorstehenden Ansprüche, **dadurch gekennzeichnet, dass** es Zuführmittel für eine zweite Komponente eines Zweikomponentenleims auf einer oberen Oberfläche (32") eines Blechs (32) umfasst, das innerhalb oder außerhalb der Scherform eingerichtet ist.

7. Gerät nach Anspruch 6, **dadurch gekennzeichnet, dass** die Mittel zum Zuführen der zweiten Leimkomponente eine Sprühvorrichtung (40) umfassen, die dazu angepasst ist, eine Schicht aus zweiter Leimkomponente auf der oberen Fläche (32") des Blechs (32) abzuscheiden.

## Revendications

1. Appareil (10) pour assembler des boîtiers lamellaires à usage électrique dans des machines électriques telles que des moteurs, des générateurs, des transformateurs, des compteurs, des bobines d'allumage et des équipements électriques similaires au moyen d'une liaison avec de la colle mono- ou bi-composant, disposé à l'extérieur ou à l'intérieur d'un moule de cisaillement (30) et comprenant un dispositif comprenant des moyens pour appliquer une quantité de colle (33) sur une surface inférieure (32') d'une feuille (32) selon un pas correspondant au pas d'avancement de ladite feuille (32), **caractérisé en ce que** lesdits moyens pour appliquer une quantité de colle comprennent des moyens pour retirer la colle d'un élément conteneur comprenant un premier rouleau (16), ou rouleau d'étirage, supporté de manière rotative par un premier corps (12) et des moyens pour déposer ladite colle comprenant un second rouleau (22), ou rouleau de moulage, supporté de manière rotative par un second corps (18), lesdits premier rouleau (16) et second rouleau (22) avec des axes de rotation parallèles l'un à l'autre et avec leurs surfaces circonférentielles respectives en contact et en mouvement simultané et synchrone avec l'avancement de la feuille (32) et cisaillage des tôles au moyen d'une transmission (11) comprenant une première roue (14) disposée à l'opposé du premier rouleau (16) et coaxiale à celui-ci pour partager le même axe de rotation, une seconde roue (20) disposée à l'opposé du second rouleau (22) et coaxiale à celui-ci pour partager le même axe de rotation, l'une parmi ladite première roue (14) et ladite seconde roue (20) étant un entraînement et l'autre entre lesdites première roue (14) et seconde roue (20) étant soit guidée et entraînée en rotation au moyen de l'entraînement, soit étant un entraînement comprenant un moteur (26).

2. Appareil selon la revendication 1, **caractérisé en ce que** le premier rouleau (16) est disposé partiellement immergé dans l'élément conteneur de colle défini par un plateau (24) disposé sous ledit premier rouleau (16) pour déposer une couche de colle le long de toute la surface circonférentielle dudit premier rouleau (16).

3. Appareil selon la revendication 1, **caractérisé en ce que** le second rouleau (22), ou rouleau de moule, comprend des moyens d'étirage de colle formés et s'étendant le long de tout le profil circonférentiel dudit second rouleau (22).

4. Appareil selon la revendication 3, **caractérisé en ce que** les moyens d'étirage de colle comprennent une pluralité de reliefs en saillie externe (28) par rapport à la surface circonférentielle du second rouleau (22), le pas entre lesdits reliefs en saillie externe (28) étant défini en fonction de l'avancement de la feuille dans le moule, lesdits reliefs en saillie externe (28) définissant un siège pour une quantité (33) de colle transférée à partir du premier rouleau (16) et devant être disposée sur une surface inférieure (32') de la feuille (32) conformément au pas d'avancement de ladite feuille (32).

5. Appareil selon la revendication 3, **caractérisé en ce que** les moyens d'étirage de colle comprennent une pluralité d'inserts ou de poches formés à partir de la surface latérale dudit second rouleau et s'étendant dans son épaisseur, lesdites incisions ou poches étant également espacées les unes des autres et s'étendant le long de tout le profil circonférentiel dudit second rouleau, le pas entre lesdites incisions ou poches étant défini en fonction de l'avancement de la feuille dans le moule, les incisions ou poches définissant un siège pour une quantité (33) de colle transférée à partir du premier rouleau (16) et devant être disposée sur une surface inférieure (32') de la feuille (32) conformément au pas d'avancement de ladite feuille (32).

6. Appareil selon une ou plusieurs des revendications précédentes, **caractérisé en ce qu'**il comprend des moyens d'alimentation pour un second composant d'une colle bi-composant sur une surface supérieure (32") d'une feuille (32) disposée à l'intérieur ou à l'extérieur du moule de cisaillement.

7. Appareil selon la revendication 6, **caractérisé en ce que** les moyens pour alimenter le second composant de colle comprennent un pulvérisateur (40) adapté pour déposer une couche de second composant de colle sur ladite surface supérieure (32") de la feuille (32).
